# EUROPÄISCHE PATENTSCHRIFT

(11) **EP 2 638 334 B1**
(45) Veröffentlichungstag und Bekanntmachung des Hinweises auf die Patenterteilung: **30.09.2020**
(21) Anmeldenummer: 11779347.1
(22) Anmeldetag: 31.10.2011
(51) Int. Cl.: E02D 27/12, E04C 5/06, E02D 5/36, F28F 21/06, F24T 10/00, F24T 10/13, F24T 10/15

(54) **SYSTEM ZUM BEWEHREN UND EINRICHTEN EINES TRAGPFAHLS FÜR DIE DURCHSTRÖMUNG MIT EINEM WÄRMETRÄGERMEDIUM UND VERFAHREN ZUR HERSTELLUNG DES TRAGPFAHLS**
SYSTEM FOR REINFORCING AND SETTING UP A SUPPORTING POST FOR THE PASSAGE OF A HEAT TRANSFER MEDIUM, AND METHOD FOR PRODUCING THE SUPPORTING POST
SYSTÈME POUR ARMER ET AMÉNAGER UN PIEU PORTEUR POUR LE PASSAGE D'UN MILIEU CALOPORTEUR ET PROCÉDÉ DE FABRICATION DU PIEU PORTEUR

(30) Priorität: 09.11.2010 DE 102010050846
(43) Veröffentlichungstag der Anmeldung: 18.09.2013
(73) Patentinhaber: Rehau AG + Co, 95111 Rehau (DE)
(72) Erfinder: STOSCHUS, Jörg, 90451Nürnberg-Eibach (DE); PSYK, Mario, 90431 Nürnberg (DE)
(86) Internationale Anmeldenummer: PCT/EP2011/005490
(87) Internationale Veröffentlichungsnummer: WO 2012/062425

(56) Entgegenhaltungen:
- EP-A1- 0 189 733
- EP-A1- 1 243 700
- DE-A1-102008 023 445
- DE-U1-202006 019 801
- JP-A- 60 066 062
- JP-A- 2004 333 001
- JP-A- 2006 029 006
- US-A1- 2010 040 419

## Beschreibung

### Hintergrund der Erfindung

Die vorliegende Erfindung betrifft ein System zum Bewehren eines Tragpfahls eines Bauwerks und zum Einrichten des Tragpfahls für die Durchströmung mit einem Wärmeträgermedium gemäß dem Oberbegriff des Anspruchs 1 und ein Verfahren zur Herstellung eines Tragpfahls eines Bauwerks.

Bekannte Systeme der eingangs genannten Art umfassen neben dem Bewehrungskorb bzw. Armierungskorb zur Bewehrung bzw. Armierung des Tragpfahls eine von einem Wärmeträgermedium, insbesondere Wasser, durchströmbare Rohrleitung. Die von einem Wärmeträgermedium durchströmbare Rohrleitung kann hierbei insbesondere der Erdwärmegewinnung dienen, sofern der Tragpfahl wenigstens abschnittsweise im Erdreich aufgenommen ist. Die Nutzung einer Rohrleitung für die Erdwärmegewinnung ist daher insbesondere für Tragpfähle in Form von im Erdreich verankerten Gründungspfählen vorgesehen. Alternativ kann jedoch ein mit einer Rohrleitung versehener Tragpfahl auch für die sogenannte Betonkerntemperierung eingesetzt werden, derart, dass die Rohrleitung des Tragpfahls mit einem erwärmten bzw. erhitzten Wärmeträgermedium, insbesondere Wasser, durchströmt wird, um das jeweilige Bauwerk bzw. Gebäude zu erwärmen bzw. zu beheizen.

Bei den bekannten Lösungen wird zur Herstellung des Tragpfahls die von dem Wärmeträgermedium durchströmbare Rohrleitung durch das Innere des Bewehrungskorbs bzw. Armierungskorbs geführt und auf der unteren Seite umgelenkt und wieder zurückgeführt, wobei hierbei die Rohrleitung in der Regel mehrmals umgelenkt wird und/oder mehrere Rohrschleifen bzw. Rohrabschnitte am Ende des Bewehrungskorbs mit Verbindungselementen, wie z.B. sog. "Fittings", miteinander verbunden werden. Die Rohre werden hierbei mit Kabelbindern oder anderen Befestigungsmitteln an dem Bewehrungskorb angebracht bzw. befestigt, einhergehend mit einem sehr arbeits- und zeitintensiven Montageprozess. Nach diesem Montageprozess kann schließlich das Innere des Bewehrungskorbs zur Herstellung des Tragpfahls mit fließfähigem Betonmaterial, insbesondere Frischbeton, gefüllt werden.

Das Dokument EP0189733 offenbart ein Verfahren zur Wärmegewinnung aus dem Erdreich mittels einer mit einem in letzterem angeordneten Wärmeaustauscher verbundenen Wärmepumpe zur Beheizung eines auf einer Pfahlgründung angeordneten Gebäudes.

### Zugrundeliegende Aufgabe

Der vorliegenden Erfindung liegt die Aufgabe zugrunde, ein System zum Bewehren eines Tragpfahls eines Bauwerks und zum Einrichten des Tragpfahls für die Durchströmung mit einem Wärmeträgermedium und ein Verfahren zur Herstellung eines für die Durchströmung mit einem Wärmeträgermedium eingerichteten Tragpfahls anzugeben, mit welchen der Herstellungsaufwand für die Herstellung des Tragpfahls im Vergleich zu bekannten Lösungen wesentlich verringert werden kann.

### Erfindungsgemäße Lösung

Diese Aufgabe wird erfindungsgemäß mit einem System mit den Merkmalen des Anspruchs 1 und mit einem Verfahren mit den Merkmalen des Anspruchs 9 gelöst.

Im Unterschied zu bekannten Lösungen weist die Rohrleitung, welche vorzugsweise aus Kunststoffmaterial besteht, wenigstens einen schraubenlinienförmig ausgebildeten Bereich aufweist, welcher in Richtung der Schraubenachse des Bereichs bzw. in Richtung der Längsachse des Bereichs zusammendrückbar oder auseinanderziehbar ist, wobei der schraubenlinienförmig ausgebildete Bereich in den Bewehrungskorb einbringbar ist, und wobei der schraubenlinienförmig ausgebildete Bereich zur Anpassung an die jeweils vorhandenen Abmessungen des Bewehrungskorbs auseinanderziehbar oder zusammendrückbar ist und dass die Rohrleitung unter Beibehaltung der so eingestellten Länge des schraubenlinienförmig ausgebildeten Bereichs an dem Bewehrungskorb anbringbar oder befestigbar ist.

Der schraubenlinienförmig ausgebildete Bereich ermöglicht dem Anwender ein Auseinanderziehen oder Zusammendrücken desselben in Richtung der Schraubenachse, so dass die Länge des schraubenlinienförmig ausgebildeten Bereichs bzw. die Längserstreckung des schraubenlinienförmig ausgebildeten Bereichs in Richtung der Schraubenachse auf praktische und einfache Weise einstellbar ist. Hierbei ist der schraubenlinienförmig ausgebildete Bereich ausgehend von dem Grundzustand auseinanderziehbar oder zusammendrückbar.

Vorzugsweise ist der schraubenlinienförmig ausgebildete Bereich elastisch oder plastisch ausgebildet. Wenn der schraubenlinienförmig ausgebildete Bereich elastisch ausgebildet ist, ist der Grundzustand vorzugsweise ein unbelasteter Grundzustand, der sich nach dem Auseinanderziehen bzw. Zusammendrücken wieder einstellt, wenn die einwirkende Kraft zur Formveränderung, also insbesondere eine einwirkende Kraft zum Auseinanderziehen bzw. Zusammendrücken, wegfällt. Der schraubenlinienförmig ausgebildete Bereich kann auch plastisch ausgebildet sein, so dass eine einmal durch Auseinanderziehen oder Zusammendrücken eingestellte Länge des Bereichs ohne zusätzliche Haltekräfte bzw. Haltemittel beibehalten werden kann.

Der schraubenlinienförmig ausgebildete Bereich kann auf praktische und einfache Weise vorzugsweise im Grundzustand in den Bewehrungskorb eingebracht werden und zur Anpassung an die jeweils vorhandenen Abmessungen, insbesondere zur Anpassung an die Länge des Bewehrungskorbs, auseinandergezogen oder zusammengedrückt werden. Anschließend kann die Rohrleitung unter Beibehaltung der so eingestellten Länge des schraubenlinienförmig ausgebildeten Bereichs an dem Bewehrungskorb angebracht bzw. befestigt werden. Hierfür ist die Rohrleitung an lediglich zwei Stellen der Rohrleitung - wobei sich der schraubenlinienförmig ausgebildete Bereich vorzugsweise zwischen diesen beiden Stellen befindet - an dem Bewehrungskorb anzubringen bzw. zu befestigen. Infolge des Vorsehens des schraubenlinienförmig ausgebildeten Bereichs ist diese Fixierung völlig ausreichend. Die bei bekannten Lösungen erforderliche hohe Anzahl von Fixierungsstellen bzw. Fixierungspunkten kann erfindungsgemäß wesentlich reduziert werden, was vorteilhaft insbesondere auch mit einer wesentlichen Materialeinsparung an Befestigungsmitteln, wie Kabelbindern verbunden ist. So kann beispielsweise die Anzahl der erforderlichen Kabelbinder auf zwei Kabelbinder reduziert werden, um eine stabile Anbringung bzw. Fixierung der Rohrleitung an dem Bewehrungskorb zu gewährleisten. Ein bei bekannten Lösungen erforderliches aufwendiges und zeit- und personalintensives Anbringen der Rohrleitung an dem Bewehrungskorb entfällt.

Insgesamt gesehen kann der Herstellungsaufwand für die Herstellung eines bewehrten Tragpfahls, der für die Durchströmung mit einem Wärmeträgermedium eingerichtet ist, wesentlich verringert werden, wobei insbesondere der Zeitaufwand deutlich reduziert werden kann. Im Unterschied zu den bekannten Lösungen, welche ein umständliches Einbringen und Befestigen der Rohrleitung an dem Bewehrungskorb erforderlich machen, lässt sich bei Einsatz des erfindungsgemäßen Systems der Zeitaufwand für das Anbringen bzw. Befestigen der Rohrleitung an dem Bewehrungskorb von ca. zwei Stunden auf ca. 5 Minuten reduzieren, sofern man zwei Techniker für diese Arbeit vorsieht.

Ferner kann durch Vorsehen des schraubenlinienförmig ausgebildeten Bereichs die pro Zeiteinheit und Volumeneinheit von dem jeweiligen Tragpfahl aufnehmbare oder abgebbare Wärmeenergie deutlich erhöht werden, je nachdem ob der Tragpfahl für die Erdwärmegewinnung oder die Erwärmung des Bauwerks, welches insbesondere in Form eines Gebäudes ausgebildet sein kann, vorgesehen ist. Denn der von dem schraubenlinienförmig ausgebildeten Bereich beanspruchte bzw. umfasste Anteil an der gesamten Rohrlänge ist infolge der schraubenlinienförmigen Ausbildung wesentlich größer als es bei bekannten Lösungen für vergleichbare große Raumbereiche möglich ist, so dass insgesamt gesehen der Wirkungsgrad im Vergleich zu bekannten Lösungen wesentlich verbessert ist. Ein weiterer Vorteil des Vorsehens des schraubenlinienförmig ausgebildeten Bereichs besteht daher auch darin, dass auch die für eine wirksame Erdwärmegewinnung erforderliche Verlegtiefe bzw. die Tiefe des jeweils erforderlichen Erdlochs wesentlich reduziert werden kann. So kann z.B. eine übliche Verlegtiefe eines bekannten Tragpfahls, der für die Erdwärmegewinnung eingerichtet ist, z.B. von ca. 10 Meter auf ca. 5 Meter reduziert werden, einhergehend mit einer deutlichen Reduzierung des Arbeitsaufwands und des benötigen Materials, wie Frischbeton, Verschalungselementen etc.

Der Bewehrungskorb ist zur Herstellung des Tragpfahls in üblicher Weise dafür vorgesehen, in eine Gussform eingebracht zu werden, wobei es sich bei der Gussform um die Negativform des Tragpfahls handelt und welche vorzugsweise in Form einer Schalung ausgebildet ist. Der Bewehrungskorb kann insbesondere dafür vorgesehen sein, in eine Gussform eingebracht zu werden, welche zur Ausbildung eines im Erdreich wenigstens abschnittsweise aufgenommenen Tragpfahls wenigstens abschnittsweise in einem Erdloch angeordnet ist. In diesem Fall dient das erfindungsgemäße System dem Bewehren eines Tragpfahls eines Gebäudes, der z.B. in Form eines Gründungspfahls wenigstens abschnittsweise oder vollständig im Erdreich angeordnet ist, wobei die Rohrleitung hierbei für die Erdwärmegewinnung vorgesehen ist. Für die Erdwärmgewinnung wird die Rohrleitung mit dem Wärmeträgermedium durchströmt, um Erdwärme auf das Wärmeträgermedium, welches vorzugsweise Wasser ist, zu übertragen.

Der Bewehrungskorb kann insbesondere auch dafür vorgesehen sein, in eine Gussform eingebracht zu werden, welche zur Ausbildung bzw. Herstellung eines Tragpfahls eines Bauwerks in Form eines Gebäudes vorgesehen ist, wobei der Tragpfahl für die Gebäudeerwärmung eingerichtet ist. Für die Gebäudeerwärmung kann die Rohrleitung mit einem erwärmten Wärmeträgermedium durchströmt werden, um Wärmeenergie von dem Wärmeträgermedium, welches vorzugsweise Wasser ist, über den Tragpfahl auf das Gebäude, insbesondere Gebäuderäume, zu übertragen.

Bei einer praktischen Ausführungsform weist die Rohrleitung zwei sich an den schraubenlinienförmig ausgebildeten Bereich anschließende Endabschnitte auf, wobei einer der beiden Endabschnitte sich von einem Ende des schraubenlinienförmigen Bereichs durchgehend durch den von dem Bereich eingefassten Raumbereich erstreckt.

Diese praktische Ausführungsform, bei welcher die Enden der Rohrleitung vorzugsweise einen Abstand von maximal 20 cm voneinander aufweisen können, ermöglicht auf praktische und einfache Weise die Herstellung eines bewehrten und für die Durchströmung mit einem Wärmeträgermedium eingerichteten Tragpfahls. Infolge der Rückführung eines der beiden Endabschnitte durchgehend durch den eingefassten Raumbereich sind die beiden Enden der Rohrleitung, wenn sich der schraubenlinienförmig ausgebildete Bereich innerhalb des Bewehrungskorbs befindet, von außerhalb des Bewehrungskorbs leicht zugänglich. Der schraubenlinienförmig ausgebildete Bereich wird hierbei vorzugsweise derart in dem Bewehrungskorb angeordnet, dass sich die Enden der Rohrleitung außerhalb des Bewehrungskorbs befinden, so dass nach Fertigstellung bzw. Herstellung des Tragpfahls die Enden für die Zufuhr bzw. die Abfuhr des Wärmeträgermediums - welches insbesondere ein Wärmeträger-Fluid bzw. eine Wärmeträger-Flüssigkeit, insbesondere Wasser sein kann - einsetzbar sind.

Bei einer weiteren praktischen Ausführungsform weist die Rohrleitung zwei schraubenlinienförmig ausgebildete Bereiche auf, die zusammen einen in Form einer Doppelhelix ausgebildeten Bereich ausbilden. Durch Vorsehen des in Form einer Doppelhelix ausgebildeten Bereichs kann die pro Zeiteinheit und Volumeneinheit von dem jeweiligen Tragpfahl aufnehmbare oder abgebbare Wärmeenergie nochmals deutlich erhöht werden, und war infolge einer Verdopplung der Länge des von diesem Bereich beanspruchten bzw. umfassten Anteils an der gesamten Rohrlänge im Vergleich zu einer einfachen Schraubenlinie.

Bei einer bevorzugten Ausführungsform ist der Bewehrungskorb im wesentlich in Form eines Hohlzylinders mit kreisförmiger Grundfläche ausgebildet, wobei der Durchmesser der Grundfläche um maximal 10 % größer ausgebildet ist, als die maximale Quererstreckung des schraubenlinienförmig ausgebildeten Bereichs. Diese bevorzugte Ausführungsform ermöglicht zum einen ein einfaches und praktisches Einbringen bzw. Anordnen des schraubenlinienförmig ausgebildeten Bereichs in dem Bewehrungskorb. Ferner stellt die vorgesehene Begrenzung des Durchmessers der Grundfläche eine möglichst wirksame Ausnutzung des Inneren des Bewehrungskorbs sicher, einhergehend mit der Erzielung eines hohen Wirkungsgrads für die Erdwärmegewinnung bzw. Gebäudeerwärmung.

Bei einer praktischen Ausführungsform weist die Rohrleitung zumindest abschnittsweise einen ovalen Querschnitt, vorzugsweise mit einer Ovalität im Bereich von 1 % bis 45 %, besonders bevorzugt mit einer Ovalität im Bereich von 10 % bis 30 % auf. Unter Ovalität versteht man die Abweichung von der Kreisform (Unrundheit), im vorliegenden Fall definiert als
(großer Durchmesser dividiert durch kleinen Durchmesser des Rohrquerschnitts) - 1, (Angabe in %).

Ein derartiger ovaler Querschnitt des Rohres bewirkt eine Vergrößerung des Verhältnisses von der Oberfläche des Rohres zu seiner freien Querschnittsfläche, wodurch eine Verbesserung der Wärmeaufnahme bzw. Wärmeabgabe vom strömenden Wärmeträgermedium an das Erdreich erfolgt. Eine derartige Verbesserung des Wärmetransfers zwischen Wärmeträgermedium und Erdreich kann ebenso bewirkt werden, indem an der Innenseite des Rohres Einbauten und/oder Innenriefen vorgesehen sind. Derartige Einbauten und Innenriefen können zusätzlich zur Ovalisierung des Rohrquerschnitts verwendet werden oder als alleinige Maßnahmen bei rundem Rohrquerschnitt Verwendung finden. Derartige Maßnahmen erhöhen darüber hinaus die Turbulenz der Strömung des Wärmeträgermediums in dem Rohr und bewirken dadurch eine verbesserte Wärmeaufnahme bzw. Wärmeabgabe durch das das Rohr durchströmende Wärmeträgermedium.

Bei einer weiteren praktischen Ausführungsform weist das System eine den schaubenlinienförmig ausgebildeten Bereich umschließende Transportverpackung auf, die eingerichtet ist, den Bereich nach dem Zusammendrücken in dem zusammengedrückten Zustand zu halten. Durch die Transportverpackung kann der schaubenlinienförmig ausgebildete Bereich, sofern dieser wenigstens teilweise elastisch ausgebildet ist, in einem zusammengedrückten Zustand gehalten werden bzw. unter axialer Vorspannung in einem kontrahierten Zustand gehalten werden. Auf diese Weise kann die Rohrleitung vorteilhaft unter Ausbildung eines kleinen Volumens sicher transportiert und gelagert werden.

Die Rohrleitung besteht, wie bereits oben dargelegt, vorzugsweise aus einem Kunststoffmaterial bzw. einem Polymermaterial, wobei das Polymermaterial vorzugsweise ein vernetztes Polyolefin ist und wobei vernetztes Polyethylen (PE-X) besonders bevorzugt ist. Bei dem vernetzten Polyethylen kann es sich um peroxidvernetztes Polyethylen (PE-Xa), silanvernetztes Polyethylen (PE-Xb), Elektronenstrahl-vernetztes Polyethylen (PE-Xc), azovernetztes Polyethylen (PE-Xd) sowie um gemischte Varianten dieser vernetzten Polyethylene handeln, wobei peroxidvernetztes Polyethylen besonders bevorzugt ist. Derartige Materialien zeigen eine hohe Punktlastbeständigkeit und Spannungsrissbeständigkeit und sind daher für ein Verlegen unter schwierigen Bedingungen geeignet.

Weiterhin kann es sich als nützlich erweisen, wenn in dem Polymermaterial des Rohres wärmeleitende Partikel in einer Menge von 1 Gew.-% bis 40 Gew.-%, bezogen auf das Gewicht des Polymermaterials, enthalten sind. Bezogen auf das Gewicht des Polymermaterials des Rohres ist es bevorzugt, dass in dem Polymermaterials 10 Gew.-% bis
30 Gew.-% wärmeleitender Partikel, besonders bevorzugt 18 Gew.-% bis 22 Gew.-% wärmeleitender Partikel enthalten sind. Das Vorhandensein derartiger wärmeleitender Partikel in dem Polymermaterial begünstigt den Wärmeübergang zwischen dem Wärmeträgermedium und dem Bereich in Umgebung des Tragpfahls. Dabei haben sich als wärmeleitende Partikel Graphit, Glimmer, Wollastonit, Talkum, Kreide, Glasfasern, Metalle und Gemische dieser Materialien als besonders günstig erwiesen.

Das erfindungsgemäße Verfahren zur Herstellung eines Tragpfahls eines Bauwerks, der für die Durchströmung mit einem Wärmeträgermedium eingerichtet ist, umfasst die Schritte: (A) Ausbilden einer Gussform und Einbringen eines Bewehrungskorbs in die Gussform, (B) Bereitstellen einer von einem Wärmeträgermedium durchströmbaren Rohrleitung, wobei die Rohrleitung wenigstens einen schraubenlinienförmig ausgebildeten Bereich aufweist, welcher in Richtung der Schraubenachse des Bereichs zusammendrückbar oder auseinanderziehbar ist, (C) Einbringen des schraubenlinienförmig ausgebildeten Bereichs der Rohrleitung in den Bewehrungskorb, (D) sofern die Länge des schraubenlinienförmig ausgebildeten Bereichs nicht einer vorgegebenen Länge entspricht, Einstellen der vorgegebenen Länge durch Zusammendrücken oder Auseinanderziehen des Bereichs und Anbringen bzw. Befestigen der Rohrleitung an dem Bewehrungskorb unter Beibehaltung der vorgegebenen Länge, (F) Füllen der Gussform mit fließfähigem Betonmaterial, und (G) Aushärten des Betonmaterials.

Bei der Gussform, also der Negativform des Tragpfahls, handelt es sich vorzugsweise um eine Gussform in Form einer Schalung, wobei die Gussform für die Ausbildung eines beliebigen Tragpfahls vorgesehen sein kann, der durch Vorsehen der Rohrleitung für die Erdwärmegewinnung oder die Gebäudeerwärmung bzw. Beheizung eines Gebäudes eingerichtet sein kann.

Die vorgegebene Länge ist vorzugsweise eine an die Länge des Bewehrungskorbs angepasste Länge bzw. eine Länge, welche der Länge des Bewehrungskorbs entspricht bzw. im Wesentlichen entspricht. Die vorgegebene Länge kann auch eine Länge sein, die um bis zu 30 % gegenüber der Länge des Bewehrungskorbs verkürzt ist.

Bei einer Ausführungsform des erfindungsgemäßen Verfahrens kann in Schritt (A) die Gussform zur Herstellung eines im Erdreich wenigstens abschnittsweise aufgenommenen Tragpfahls wenigstens abschnittsweise in einem Erdloch ausgebildet werden. Auf diese Weise ist die Herstellung eines Tragpfahls in Form eines für die Erdwärmegewinnung eingerichteten Gründungspfahls möglich, der wenigstens abschnittsweise oder vollständig im Erdreich aufgenommen ist, wobei dieser Gründungspfahl insbesondere ein Gründungspfahl eines Gebäudes sein kann.

Die Erfindung betrifft ferner einen Tragpfahl mit einem erfindungsgemäßen System.

### Kurzbeschreibung der Zeichnungen

Nachfolgend werden Ausführungsbeispiele der Erfindung anhand der beigefügten Zeichnungen näher erläutert. Es zeigt:
- Fig. 1 und 2: eine schematische dreidimensionale Ansicht und eine Draufsicht eines ersten Ausführungsbeispiels eines erfindungsgemäßen Systems,
- Fig. 3: eine schematische dreidimensionale Ansicht eines zweiten Ausführungsbeispiels eines erfindungsgemäßen Systems, eingebracht in eine in einem Erdloch angeordnete Gussform, und
- Fig. 4 und 5: eine schematische dreidimensionale Ansicht und eine Draufsicht eines dritten Ausführungsbeispiels eines erfindungsgemäßen Systems.

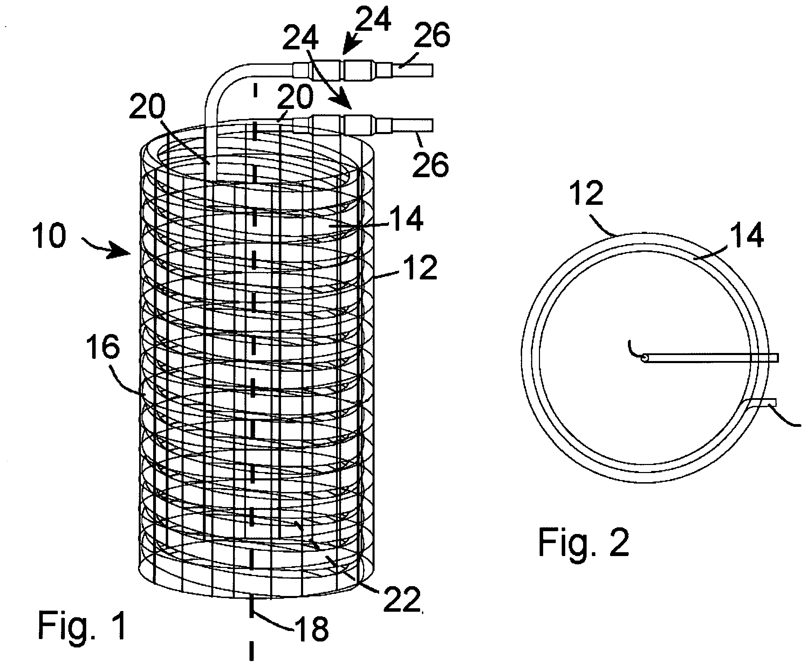

Das in Fig. 1 und 2 dargestellte erste Ausführungsbeispiel eines erfindungsgemäßen Systems 10 zum Bewehren eines Tragpfahls eines Bauwerks und zum Einrichten des Tragpfahls für die Durchströmung mit einem Wärmeträgermedium umfasst einen Bewehrungskorb 12 zum Bewehren des Tragpfahls und eine von dem Wärmeträgermedium durchströmbare Rohrleitung 14 aus Kunststoffmaterial, wobei die Rohrleitung 14 einen elastischen schraubenlinienförmig ausgebildeten Bereich 16 aufweist. Dieser Bereich 16 ist ausgehend von einem unbelasteten Grundzustand in Richtung der Schraubenachse 18 des Bereichs 16 bzw. in Richtung der Längsachse 18 des Bereichs 16 zusammendrückbar oder auseinanderziehbar. Der schraubenlinienförmig ausgebildete Bereich 16 ist in dem hier dargestellten Ausführungsbeispiel in den Bewehrungskorb 12 eingebracht bzw. in diesem angeordnet.

Die Rohrleitung 14 weist zwei sich an den schraubenlinienförmig ausgebildeten Bereich anschließende Endabschnitte 20 auf, wobei einer der beiden Endabschnitte 20 sich von einem Ende des schraubenlinienförmigen Bereichs 16 durchgehend durch den von dem Bereich 16 eingefassten Raumbereich 22 erstreckt.

Infolge der Rückführung eines der beiden Endabschnitte 20 durchgehend durch den eingefassten Raumbereich 22 sind die beiden Enden 24 der Rohrleitung 14, wenn sich der schraubenlinienförmig ausgebildete Bereich 16 innerhalb des Bewehrungskorbs 12 befindet, von außerhalb des Bewehrungskorbs 12 leicht zugänglich. Beide Enden 24 sind für die Zuführung bzw. Abführung von Wärmeträgermedium in Form von Wasser jeweils mit einem Fluidleitungsanschluss 26 zum Anschluss an eine Zuführleitung bzw. Abführleitung (nicht dargestellt) versehen.

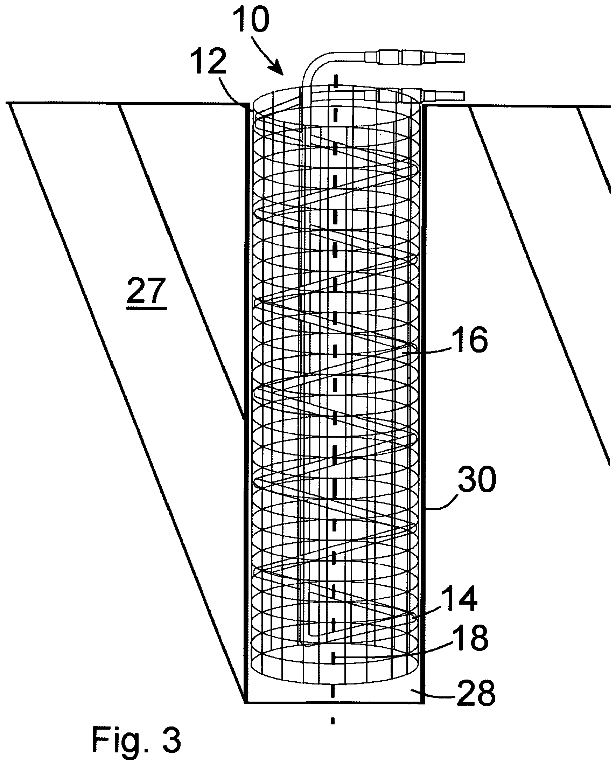

Die Fig. 3 zeigt eine schematische dreidimensionale Ansicht eines zweiten Ausführungsbeispiels eines erfindungsgemäßen Systems 10, eingebracht in eine in einem Erdloch 28 angeordnete Gussform 30. Im Unterschied zu dem in den Fig. 1 und 2 dargestellten Ausführungsbeispiel weist das in der Fig. 3 dargestellte System 10 einen schraubenlinienförmig ausgebildeten Bereich 16 auf, dessen Steigung größer ausgebildet ist als die Steigung des in Fig. 1 dargestellten Bereichs 16. Die Fig. 3 veranschaulicht die Situation in welcher der Bewehrungskorb 12 bzw. Armierungskorb 12 in einer Gussform 30 in Form einer Schalung 30 angeordnet ist, die sich zur Ausbildung eines Tragpfahls in Form eines im Erdreich 27 verankerten Gründungspfahls in einem Erdloch 28 befindet. Durch Füllen der Gussform 30 mit fließfähigem Betonmaterial, vorzugsweise Frischbeton, und Aushärten des Betonmaterials ist ein für die Erdwärmegewinnung eingerichteter Tragpfahl in Form eines Gründungspfahls herstellbar, welcher durch den Bewehrungskorb 12 aus Metall, vorzugsweise Stahl, wirksam bewehrt bzw. armiert ist.

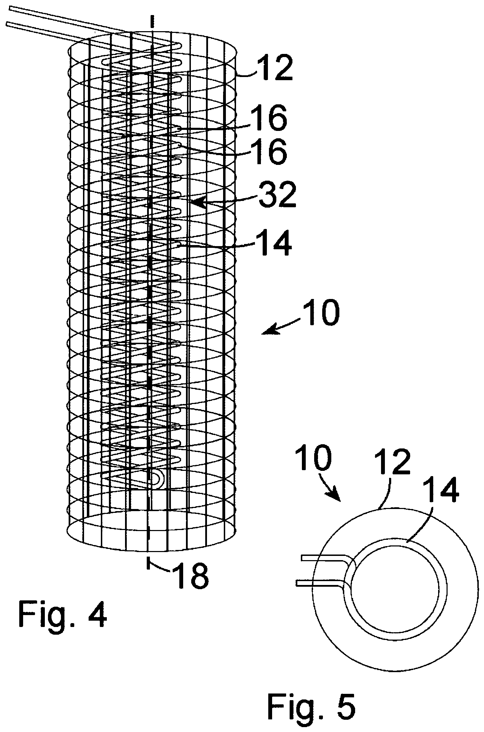

Die Fig. 4 und 5 zeigen eine schematische dreidimensionale Ansicht und eine Draufsicht eines dritten Ausführungsbeispiels eines erfindungsgemäßen Systems 10, bei welchem die Rohrleitung 14 zwei schraubenlinienförmig ausgebildete Bereiche 16 aufweist, die zusammen einen in Form einer Doppelhelix ausgebildeten Bereich 32 ausbilden.

### Bezugszeichenliste

- 10: System
- 12: Bewehrungskorb
- 14: Rohrleitung
- 16: schraubenlinienförmig ausgebildeter Bereich
- 18: Schraubenachse
- 20: Endabschnitt Rohrleitung
- 22: Raumbereich
- 24: Ende Rohrleitung
- 26: Fluidleitungsanschluss
- 27: Erdreich
- 28: Erdloch
- 30: Gussform
- 32: Doppelhelix-Bereich

## Patentansprüche

1. System (10) zum Bewehren eines Tragpfahls eines Bauwerks und zum Einrichten des Tragpfahls für die Durchströmung mit einem Wärmeträgermedium,
- mit einem Bewehrungskorb (12) zum Bewehren des Tragpfahls, und
- einer von dem Wärmeträgermedium durchströmbaren Rohrleitung (14),
wobei die Rohrleitung (14) wenigstens einen schraubenlinienförmig ausgebildeten Bereich (16) aufweist, welcher in Richtung der Schraubenachse (18) des Bereichs (16) zusammendrückbar oder auseinanderziehbar ist, wobei der schraubenlinienförmig ausgebildete Bereich (16) in den Bewehrungskorb (12) einbringbar ist,
wobei der schraubenlinienförmig ausgebildete Bereich (16) zur Anpassung an die jeweils vorhandenen Abmessungen des Bewehrungskorbs (12) auseinanderziehbar oder zusammendrückbar ist und dass die Rohrleitung (14) unter Beibehaltung der so eingestellten Länge des schraubenlinienförmig ausgebildeten Bereichs (16) an dem Bewehrungskorb (12) anbringbar oder befestigbar ist.

2. System (10) nach Anspruch 1, **dadurch gekennzeichnet, dass** die Rohrleitung (14) zwei sich an den schraubenlinienförmig ausgebildeten Bereich (16) anschließende Endabschnitte (20) aufweist, wobei einer der beiden Endabschnitte (20) sich von einem Ende des schraubenlinienförmigen Bereichs (16) durchgehend durch den von dem Bereich (16) eingefassten Raumbereich (22) erstreckt.

3. System (10) nach Anspruch 1 oder 2, **dadurch gekennzeichnet, dass** die Rohrleitung (14) zwei schraubenlinienförmig ausgebildete Bereiche (16) aufweist, die zusammen einen in Form einer Doppelhelix ausgebildeten Bereich (32) ausbilden.

4. System (10) nach einem der vorangehenden Ansprüche, **dadurch gekennzeichnet, dass** der Bewehrungskorb (12) im wesentlich in Form eines Hohlzylinders mit kreisförmiger Grundfläche ausgebildet ist, wobei der Durchmesser der Grundfläche um maximal 10 % größer ausgebildet ist, als die maximale Quererstreckung des schraubenlinienförmig ausgebildeten Bereichs (16).

5. System (10) nach einem der vorangehenden Ansprüche, **dadurch gekennzeichnet, dass** die Rohrleitung (14) zumindest abschnittsweise einen ovalen Querschnitt, vorzugsweise mit einer Ovalität im Bereich von 1 % bis 45 %, besonders bevorzugt mit einer Ovalität im Bereich von 10 % bis 30 %, aufweist.

6. System (10) nach einem der vorangehenden Ansprüche, **dadurch gekennzeichnet, dass** der schraubenlinienförmig ausgebildete Bereich (16) elastisch oder plastisch ausgebildet ist.

7. System (10) nach einem der vorangehenden Ansprüche, **dadurch gekennzeichnet, dass** das System (10) eine den schaubenlinienförmig ausgebildeten Bereich (16) umschließende Transportverpackung aufweist, die eingerichtet ist, den Bereich nach dem Zusammendrücken in dem zusammengedrückten Zustand zu halten.

8. Tragpfahl mit einem System (10) nach einem der Ansprüche 1 bis 6.

9. Verfahren zur Herstellung eines Tragpfahls eines Bauwerks, der für die Durchströmung mit einem Wärmeträgermedium eingerichtet ist, umfassend die folgenden Schritte:
(A) Ausbilden einer Gussform (30) und Einbringen eines Bewehrungskorbs (12) in die Gussform (30),
(B) Bereitstellen einer von einem Wärmeträgermedium durchströmbaren Rohrleitung (14), wobei die Rohrleitung (14) wenigstens einen schraubenlinienförmig ausgebildeten Bereich (16) aufweist, welcher in Richtung der Schraubenachse (18) des Bereichs (16) zusammendrückbar oder auseinanderziehbar ist,
(C) Einbringen des schraubenlinienförmig ausgebildeten Bereichs (16) der Rohrleitung (14) in den Bewehrungskorb (12),
(D) sofern die Länge des schraubenlinienförmig ausgebildeten Bereichs (16) nicht einer vorgegebenen Länge entspricht, Einstellen der vorgegebenen Länge durch Zusammendrücken oder Auseinanderziehen des Bereichs (16) und Anbringen bzw. Befestigen der Rohrleitung (14) an dem Bewehrungskorb (12) unter Beibehaltung der vorgegebenen Länge,
(F) Füllen der Gussform (30) mit fließfähigem Betonmaterial, und
(G) Aushärten des Betonmaterials.

10. Verfahren nach Anspruch 9, **dadurch gekennzeichnet, dass** in Schritt (A) die Gussform (30) zur Herstellung eines im Erdreich (27) wenigstens abschnittsweise aufgenommenen Tragpfahls wenigstens abschnittsweise in einem Erdloch (28) ausgebildet wird.

## Claims

1. A system (10) for reinforcing a supporting post of a construction and for setting up the supporting post for the passage of a heat transfer medium,
- with a reinforcing cage (12) for reinforcing the supporting post, and
- a pipe (14) through which the heat transfer medium can flow,
wherein the pipe (14) has at least one region (16) which is of helically curved configuration and which can be compressed or pulled apart in the direction of the helix axis (18) of the region (16), wherein the region (16) of helically curved configuration can be introduced into the reinforcing cage (12),
wherein the region (16) of helically curved configuration can be compressed or pulled apart to be adapted to the dimensions existing in each case of the reinforcing cage (12), and in that the pipe (14) can be attached or fastened to the reinforcing cage (12) while maintaining the length of the region (16) of helically curved configuration that has been adjusted in this way.

2. The system (10) according to claim 1, **characterised in that** the pipe (14) has two end sections (20) adjacent to the region (16) of helically curved configuration, wherein one of the two end sections (20) extends continuously from one end of the helically curved region (16) through the spatial region (22) surrounded by the region (16).

3. The system (10) according to claim 1 or 2, **characterised in that** the pipe (14) has two regions (16) of helically curved configuration, which together form a region (32) configured in the form of a double helix.

4. The system (10) according to one of the preceding claims, **characterised in that** the reinforcing cage (12) is substantially configured in the form of a hollow cylinder with a circular base area, wherein the diameter of the base area is configured to be no more than 10% larger than the maximum transverse extension of the region (16) of helically curved configuration.

5. The system (10) according to one of the preceding claims, **characterised in that** the pipe (14) has, at least in part, an oval cross-section, preferably with an ovality in the range of 1% to 45% and particularly preferably with an ovality in the range of 10% to 30%.

6. The system (10) according to one of the preceding claims, **characterised in that** the region (16) of helically curved configuration is of elastic or plastic configuration.

7. The system (10) according to one of the preceding claims, **characterised in that** the system (10) has a transport packaging surrounding the region (16) of helically curved configuration, which transport packaging is set up to keep the region in the compressed state after it has been compressed.

8. A supporting post having a system (10) according to one of claims 1 to 6.

9. A method of producing a supporting post of a construction, which is set up for the passage of a heat transfer medium, comprising the following steps:
(A) forming a casting mould (30) and introducing a reinforcing cage (12) into the casting mould (30),
(B) providing a pipe (14) through which a heat transfer medium can flow, the pipe (14) having at least one region (16) of helically curved configuration which can be compressed or pulled apart in the direction of the helix axis (18) of the region (16),
(C) introducing the region (16) of helically curved configuration of the pipe (14) into the reinforcing cage (12),
(D) provided that the length of the region (16) of helically curved configuration does not correspond to a predefined length, setting the predefined length by compressing or pulling apart the region (16) and attaching or fastening the pipe (14) to the reinforcing cage (12) while maintaining the predefined length,
(F) filling the casting mould (30) with flowable concrete material, and
(G) curing the concrete material.

10. The method according to claim 9, **characterised in that** in step (A) the casting mould (30) is formed at least in part in a ground hole (28) to produce a supporting post that is held at least in part in the ground (27).

## Revendications

1. Système (10) pour armer un pieu porteur d'un bâtiment et pour aménager le pieu porteur pour le passage d'un milieu caloporteur,
- comprenant une cage d'armature (12) pour armer le pieu porteur, et
- une canalisation (14) dans laquelle peut passer le milieu caloporteur,
dans lequel la canalisation (14) comporte au moins une zone (16) réalisée en forme d'hélice, qui peut être comprimée ou étirée dans la direction de l'axe de l'hélice (18) de la zone (16), la zone (16) réalisée en forme d'hélice pouvant être introduite dans la cage d'armature (12),
dans lequel la zone (16) réalisée en forme d'hélice peut être étirée ou comprimée pour l'adaptation aux dimensions respectivement existantes de la cage d'armature (12) et en ce que la conduite (14) peut être montée ou fixée sur la cage d'armature (12) en conservant la longueur ainsi réglée de la zone (16) réalisée en forme d'hélice.

2. Système (10) selon la revendication 1, **caractérisé en ce que** la conduite (14) comporte deux parties d'extrémité (20) contiguës à la zone (16) réalisée en forme d'hélice, une des deux parties d'extrémité (20) s'étendant depuis une extrémité de la zone (16) en forme d'hélice en continu à travers l'espace (22) bordé par la zone (16).

3. Système (10) selon la revendication 1 ou 2, **caractérisé en ce que** la conduite (14) comporte deux zones (16) réalisées en forme d'hélice, qui forment ensemble une zone (32) réalisée sous la forme d'une double hélice.

4. Système (10) selon l'une des revendications précédentes, **caractérisé en ce que** la cage d'armature (12) est réalisée sensiblement sous la forme d'un cylindre creux avec une base circulaire, le diamètre de la base étant réalisé au maximum 10 % plus grand que l'extension transversale maximale de la zone (16) réalisée en forme d'hélice.

5. Système (10) selon l'une des revendications précédentes, **caractérisé en ce que** la conduite (14) comporte au moins sur certaines parties une section transversale ovale, de préférence avec une ovalité comprise entre 1 % et 45 %, de manière particulièrement préférée avec une ovalité comprise entre 10 % et 30 %.

6. Système (10) selon l'une des revendications précédentes, **caractérisé en ce que** la zone (16) réalisée en forme d'hélice est réalisée élastique ou souple.

7. Système (10) selon l'une des revendications précédentes, **caractérisé en ce que** le système (10) comporte un emballage de transport entourant la zone (16) réalisée en forme d'hélice, qui est conçu pour maintenir la zone dans l'état comprimé après la compression.

8. Pieu porteur comprenant un système (1) selon l'une des revendications 1 à 6.

9. Procédé de fabrication d'un pieu porteur d'un bâtiment, qui est conçu pour le passage d'un fluide caloporteur, comprenant les étapes suivantes :
(A) formation d'un moule (30) et introduction d'une cage d'armature (12) dans le moule (30),
(B) préparation d'une conduite (14) dans laquelle un milieu caloporteur peut passer, la conduite (14) comportant au moins une zone (16) réalisée en forme d'hélice, qui peut être comprimée ou étirée dans la direction de l'axe de l'hélice (18) de la zone (16),
(C) introduction de la zone (16) réalisée en forme d'hélice de la conduite (14) dans la cage d'armature (12),
(D) si la longueur de la zone (16) réalisée en forme d'hélice ne correspond pas à une longueur prédéfinie, réglage de la longueur prédéfinie en comprimant ou étirant la zone (16) et montage ou fixation de la conduite (14) sur la cage d'armature (12) en conservant la longueur prédéfinie,
(F) remplissage du moule (30) avec du béton coulant, et
(G) durcissement du béton.

10. Procédé selon la revendication 9, **caractérisé en ce que**, dans l'étape (A), le moule (30) pour la fabrication d'un pieu porteur reçu au moins en partie dans le sol (27) est réalisé au moins en partie dans un trou dans le sol (28).
